Europäisches Patentamt

European Patent Office

Office européen des brevets

(11) Veröffentlichungsnummer: **0 185 356 B1**

# EUROPÄISCHE PATENTSCHRIFT

(45) Veröffentlichungstag der Patentschrift: **06.03.91**

(51) Int. Cl.⁵: **C09J 133/08**, C09J 131/04, C08L 33/08, C08L 31/08

(21) Anmeldenummer: **85116086.1**

(22) Anmeldetag: **17.12.85**

(54) **Wärmefester Haftklebstoff.**

(30) Priorität: **20.12.84 DE 3446565**

(43) Veröffentlichungstag der Anmeldung:
**25.06.86 Patentblatt 86/26**

(45) Bekanntmachung des Hinweises auf die
Patenterteilung:
**06.03.91 Patentblatt 91/10**

(84) Benannte Vertragsstaaten:
**BE CH DE FR GB IT LI NL SE**

(56) Entgegenhaltungen:
**EP-A- 0 017 986**
**EP-A- 0 103 146**

(73) Patentinhaber: **WACKER-CHEMIE GMBH**
**Prinzregentenstrasse 22**
**W-8000 München 22(DE)**

(72) Erfinder: **Ball, Peter, Dr. Dipl.-Chem.**
**Kettelerstrasse 11**
**W-8261 Emmerting(DE)**
Erfinder: **Weissgerber, Rudolf, Dr. Dipl.-Chem.**
**Glonner Strasse 11**
**W-8263 Burghausen(DE)**

Rank Xerox (UK) Business Services

## Beschreibung

Aus der EP-B-17 986 (und der entsprechenden US-A-4 322 516) sind Haftkleber bekannt, die auf wäßrigen Dispersionen eines Copolymerisats aus Ethylen, Acrylsäureestern von Alkoholen mit 4 bis 12 C-Atomen, Vinylacetat, gegebenenfalls substituiertem (Meth-)Acrylamid, sowie gegebenenfalls weiteren olefinisch ungesättigten und mit Wasser in beliebigem Verhältnis mischbaren oder monomerlöslichen oder mehrfach olefinisch ungesättigten Monomeren basieren, wobei die Glasübergangstemperatur des Copolymerisats im Bereich von -20 bis -60° C und der K-Wert nach Fikentscher, gemessen in Tetrahydrofuran, im Bereich von 50 bis 180 liegen soll.

Diese bekannten Haftkleber besitzen eine ausgezeichnete Kohäsion, jedoch läßt die Adhäsion und Klebrigkeit auf einigen Substraten, z. B. Glas und ähnlichen Untergründen, insbesondere bei Erhöhung der Temperatur vielfach noch zu wünschen übrig.

Es galt daher, bei Aufrechterhaltung des übrigen vorteilhaften Eigenschaftsbildes dieser bekannten Kleber, eine Haftkleberdispersion zu finden oder auszuwählen, deren resultierender Haftkleberfilm zudem noch auch bei erhöhter Temperatur, z. B. bis 100° C, insbesondere bis 60° C, eine sehr gute oder gar ausgezeichnete Adhäsion zu einer Vielzahl von Untergründen, z. B. Glas und ähnlichen Substraten aufweist.

Gegenstand der Erfindung ist daher eine wäßrige Haftkleberdispersion, enthaltend, bezogen auf das Gesamtgewicht der Dispersion, 40 bis 65 Gewichtsprozent eines Copolymerisats, welches durch radikalische Copolymerisation von Ethylen, Acrylestern mit $C_4$ bis $C_{12}$-Alkylgruppen, Vinylacetat, ethylenisch ungesättigten Carbonsäuren, ethylenisch ungesättigten hydroxyalkylfunktionellen Verbindungen, gegebenenfalls (Meth-)Acrylamid und gegebenenfalls weiteren einfach oder mehrfach ethylenisch ungesättigten Verbindungen nach dem Emulsionspolymerisationsverfahren hergestellt wird, bzw. worden ist und eine Glasübergangstemperatur und einen K-Wert in den oben genannten Bereichen besitzt.

Das in der erfindungsgemäßen Haftkleberdispersion enthaltene Copolymerisat ist dadurch gekennzeichnet, daß es hergestellt wird, bzw. worden ist aus

a) 5 - 25 Gew.-% Ethylen
b) 95 - 75 Gew.-% eines Comonomerengemisches aus
b1 ) 40 - 65 Gew.-% Acrylester(n),
b2) 33 - 55 Gew.-% Vinylacetat,
b3) 1 - 5 Gew.-% ethylenisch ungesättigten Carbonsäuren,
b4) 1 - 8 Gew.-% ethylenisch ungesättigten hydroxyalkylfunktionellen Verbindungen,
b5) 0 - 0,8 Gew.-% (Meth-)Acrylamid,
b6) 0 - 2 Gew.-% weiteren einfach oder mehrfach ethylenisch ungesättigten Verbindungen in Gegenwart von 1 - 6 Gew.-%, bezogen auf das Comonomerengemisch, an üblichen Emulgatoren.

Hergestellt werden die Copolymerisate bzw. die erfindungsgemäße Haftkleberdispersion durch radikalische Polymerisation des Comonomerengemisches b) in den angegebenen Mengen unter einem Ethylendruck von vorzugsweise 20 bis 100 bar bei vorzugsweise 30 bis 80° C in einem Druckgefäß in Anwesenheit von 1 - 6 Gew.-%, bezogen auf das Comonomerengemisch, an Emulgatoren, wobei vorzugsweise die Komponente b1) zumindest teilweise dosiert wird.

Als Komponente b1 ) sind die Acrylester von Alkoholen mit 4 bis 12 Kohlenstoffatomen geeignet. Bevorzugt werden n-Butylacrylat und/oder Ethylhexylacrylat eingesetzt. Die verwendeten Gewichtsmengen (jeweils bezogen auf Gesamtgewicht des Comonomerengemisches und sich insgesamt jeweils zu 100 Gew.-% ergänzend) liegen bei 40 bis 65 Gew.-%, vorzugsweise bei 40 bis 60 Gew.-%. Das Vinylacetat, die Komponente b2), wird in Mengen von 33 bis 55 Gew.-% einpolymerisiert vorzugsweise in Mengen von 33 bis 50 Gew.-%.

Die in Mengen von 1 bis 5 Gew.-% eingesetzte Komponente b3) besteht aus ethylenisch ungesättigten Carbonsäuren, vorzugsweise α, ß-ungesättigten Carbonsäuren, insbesondere Acrylsäure und/oder Methacrylsäure, besonders vorzugsweise Acrylsäure.

Die gestellte Aufgabe, einen wärmefesten Haftkleber zur Verfügung zu stellen, wird überraschenderweise dadurch gelöst, daß in dem Copolymerisat in Kombination mit den Monomer einheiten der Komponenten a und b und in den engen Mengenverhältnissen Einheiten enthalten sind,die auf ethylenisch ungesättigte hydroxyalkylfunktionelle Verbindungen zurückgehen. Diese Komponente b4), insbesondere 2-Hydroxyethylacrylat und 2-Hydroxypropylacrylat, sind bei der Herstellung der Dispersion in Mengen von 1 bis 8 Gewichtsprozent eingesetzt, vorzugsweise in Mengen von 3 bis 7 Gew.-%.

Als Komponente b5) wird Acrylamid und/oder Methacrylamid, vorzugsweise Acrylamid, in Mengen von 0 bis 0,8 Gew.-%, vorzugsweise 0,05 bis 0,5 Gew.-% eingesetzt.

Als Komponente b6) sind insbesondere zu nennen ethylenisch ungesättigte Sulfate und/oder Sulfonate, insbesondere Alkalisalze der Vinylsulfonsäure, des weiteren mehrfach ungesättigte Verbindungen, insbesondere Divinyladipat. Eingesetzt werden können auch weitere monomerlösliche Comonomere wie Vinylether, Vinylpyrrolidon usw. Bevorzugt werden nur die wasserlöslichen Comonomeren, die der Stabilisierung der Dispersion dienen und vorzugsweise nur in möglichst geringen Mengen eingesetzt werden.

Die Polymerisation wird in üblichen Druckgefäßen durchgeführt. Bevorzugt werden Comonomere, die rasch in das Polymere eingebaut werden, zumindest teilweise verzögert dosiert. Z. B. werden vorzugsweise mindestens 50 Gew.-% der Komponente b1) erst während der Polymerisationsreaktion zudosiert. Die Komponente b2) kann vollständig vorgelegt oder teilweise dosiert werden, vorzugsweise wird sie vollständig vorgelegt. Die Komponente b3) kann ebenfalls vollständig vorgelegt oder dosiert werden. In einer bevorzugten Ausführungsform wird sie im Gewichtsverhältnis 1 : 5 bis 5 : 1 zwischen Monomervorlage und Monomerdosierung verteilt. Während Komponente b5) ausschließlich vorgelegt wird, wird Komponente b4) vorzugsweise vollständig dosiert, da dadurch Rheologie und Stabilität der Dispersion besonders vorteilhaft beeinflußt werden.

Alle Dosierungen erfolgen vorzugsweise im Maße des Verbrauchs der jeweiligen Komponente.

Der zu Beginn der Polymerisation eingestellte Ethylendruck kann über die gesamte Reaktionsdauer z. B. durch Nachdrücken von Ethylen konstant gehalten werden. Es ist aber auch möglich, die anfangs in den Reaktor eingebrachte Ethylenmenge nicht zu ergänzen oder den Ethylendruck innerhalb der genannten Grenzen während der Polymerisation zu variieren. Vorzugsweise wird vor Beginn der Polymerisation ein bestimmter Ethylendruck eingestellt und dem Reaktor während der Reaktion kein weiteres Ethylen mehr zugeführt. Anschließend kann noch in üblicher Weise nachpolymerisiert werden.

Die Polymerisation wird unter Initiierung mittels üblicher wasserlöslicher Radikalbildner durchgeführt, die vorzugsweise in Mengen von 0,03 bis 3 Gew.-%, bezogen auf Gesamtgewicht der Comonomeren eingesetzt werden. Es sind insbesondere Persulfate, Hydroperoxide und Perphosphate zu nennen, z. B. Ammonium- und Kaliumpersulfat sowie tert.-Butylhydroperoxid. Bevorzugt wird hierbei die Aktivierung der Radikalbildner durch Reduktionsmittel, insbesondere Formaldehydsulfoxylat, wobei vorzugsweise eine oder beide Redox-Katalysatorkomponenten während der Polymerisation dosiert werden.

Durchgeführt wird die Polymerisationsreaktion bei einem pH-Wert von vorzugsweise 3 bis 5 in Gegenwart von üblichen Emulgatoren, insbesondere von Alkyl- und Alkarylethoxylaten, die gegebenenfalls zusätzlich eine Sulfat-, Phosphat-, Succinat- oder Sulfonatgruppe besitzen, und vorzugsweise in Mengen von 2 bis 5 Gew.-% eingesetzt werden. Die Emulgatoren können entweder vorgelegt oder aber zumindest teilweise dosiert werden. Zur Regelung des pH-Wertes können Säuren, z. B. Ameisensäure, Essigsäure, Salzsäure, Schwefelsäure, oder Basen, z. B. Ammoniak, Amine, Natronlauge, Kalilauge, Calciumhydroxyd, oder übliche Puffersalze, z. B. Alkaliacetate, Alkalicarbonate, Alkaliphosphate zugegeben werden.

Zur Regelung des Molekulargewichts können bei der Polymerisation bekannte Regler, z. B. Merkaptane, Aldehyde oder Chlorkohlenwasserstoffe, zugesetzt werden.

Hinsichtlich der Anwendung und gegebenenfalls Konfektionierung der erfindungsgemäßen Haftkleberdispersionen kann auf die EP-B-17 986 verwiesen werden.

Prüfmethoden:

In der folgenden Meßwerttabelle werden die Ergebnisse der Prüfungen von Wärmeschälstandfestigkeit, Oberflächenklebrigkeit, Schälfestigkeit (Klebkraft) und Scherstandfestigkeit von mit den erfindungsgemäßen Dispersionen hergestellten haftklebenden Beschichtungen angegeben. Mit dem Ausdruck "Klebestreifen" werden Streifen aus flexiblem, folienartigen Trägermaterial, beschichtet mit einem Film aus einer erfindungsgemäßen Dispersion verstanden.

Es kamen folgende Bestimmungsmethoden zur Anwendung:

a) Wärmeschälstandfestigkeit:

Ein 5 x 8 cm² großer Klebestreifen wurde mit einer Fläche von 5 x 5 cm² auf eine Kristallglasplatte aufgelegt und mit einer 2,2 kg schweren mit Silicongummi überzogenen Stahlwalze durch zweimaliges Hin- und Herrollen angepreßt. Das Aufkleben erfolgte so, daß das freie Ende des Klebstreifens an einer Längsseite der Glasplatte überstand. Man befestigte sofort ein Gewicht von 50 g am freien Ende des Klebestreifens und fixierte die Glasplatte mit dem aufgeklebten Klebestreifen auf der Unterseite in einem auf 50 °C vorgewärmten Trockenschrank auf eine Weise, daß sich zwischen verklebtem und freiem Ende des Klebestreifens ein Winkel von 90 °C einstellte. Die Befestigung des Gewichtes war so ausgebildet, daß die Kraft gleichmäßig über die gesamte Breite des Klebestreifens wirkte. Man stellte die Zeit fest, in der der Klebestreifen bei 50 °C unter der konstanten Belastung von 50 g auf einer Strecke von 1 cm abgeschält wurde. Dazu wurde nach einer angemessenen Prüfzeit die geschälte Strecke ausgemessen und der Quotient aus Prüfzeit in Minuten und Schälstrecke in Zentimeter gebildet. Die angegebenen Werte sind Mittelwerte aus jeweils drei Einzelmessungen.

b) Oberflächenklebrigkeit:

Ein 20 cm langer und 2,5 cm breiter Klebestreifen (Trägermaterial: polymerweichmacherhaltiges PVC, 0,1 mm dick) wurde in Form einer "Schlaufe" senkrecht hängend mit der Klebstoffschicht nach außen in den oberen Backen einer Zugprüfmaschine eingespannt. Anschließend wurde die "Schlaufe" durch Zusammenfahren der beiden Backen der Zugprüfmaschine senkrecht mit einer Geschwindigkeit von 100 mm/Minute auf eine waagrecht befestigte, sorgfältig gereinigte Glasplatte ohne Druckanwendung in einer Länge von etwa 3 cm aufgelegt. Danach erfolgte sofort mit gleicher Geschwindigkeit der Abzug des Klebestreifens von der Glasoberfläche. Die höchste für das Abziehen der "Schlaufe" benötigte Kraft wird als Maß für die Oberflächenklebrigkeit hergenommen.

Der angegebene Wert ist der Mittelwert aus fünf Einzelmessungen, wobei jedesmal ein frischer Klebesrreifen und eine frische Glasoberfläche verwendet wurden.

c) Schälfestigkeit (Klebkraft):

Ein 20 cm langer und 2,5 cm breiter Klebestreifen wurde von einem Ende ausgehend in einer Länge von ca. 12 cm auf eine sorgfältig gereinigte Kristallglasplatte blasenfrei aufgelegt.

Durch 5-maliges Walzen (hin und her) mit einer 2,2 kg schweren, mit Silicongummi überzogenen Stahlwalze wurde der Klebestreifen angedrückt. Nach 8-minütiger bzw. 24-stündiger Lagerung im Klimaraum bei 23° C und 50 % relativer Luftfeuchtigkeit wurde der Klebestreifen mit einer Geschwindigkeit von 300 mm/Minute im 180°-Winkel über eine Länge von 5 cm abgezogen. Die dazu benötigte durchschnittliche Kraft wurde gemessen. Die angegebenen Werte sind Mittelwerte aus jeweils 5 Einzelmessungen.

d) Scherstandfestigkeit:

Ein 5 cm langer und 2,5 cm breiter Klebestreifen wurde mit einer Fläche von 2,5 cm x 2,5 cm so auf eine sorgfältig gereinigte Glasplatte blasenfrei aufgelegt, daß das restliche Stück des Klebestreifens über den Rand der Glasplatte hinausragte. Der Streifen wurde durch Anwalzen (5 mal hin und her) mit einer mit Silicongummi überzogenen 2,2 kg schweren Stahlwalze angedrückt. Nach einer Verklebungszeit von 8 Minuten wurde die Glasplatte so in einem Winkel von 2° zur Senkrechten (um Schälkräfte sicher auszuschließen) in einer Halterung befestigt, daß das freie Ende des Klebestreifens nach unten hing. An diesem Ende wurde ein Gewicht von 2 kg frei hängend befestigt. Das freie Ende des Klebestreifens und die Rückseite der Glasplatte schlossen einen Winkel von 178° ein. Gemessen wurde die Zeit bis sich der Klebestreifen unter dem Zug des Gewichtes von der Glasplatte löste. Die Messung wurde im Klimaraum bei 23° C und 50 % relativer Luftfeuchtigkeit durchgeführt. Die angegebenen Werte sind Mittelwerte aus jeweils 3 Einzelmessungen.

Die Messung wurde außerdem bei 50° C mit einem Gewicht von 1 kg wiederholt.

Die geprüften Klebstoffdispersionen wurden für alle Messungen mit einem Rakel in einer solchen Dicke auf die Trägerfolien aufgezogen, daß nach dem Trocknen eine gleichmäßige Polymerisatschicht von 24 bis 26 g/m$^2$ zurückblieb.

Die Reinigung der bei den Untersuchungen benutzten Glasoberflächen erfolgte durch mechanisches Entfernen von sichtbaren Verschmutzungen mit Hilfe von Wasser und gegebenen falls Reinigungsmitteln und anschließender Lagerung in einem Aceton-Bad. Vor der Benutzung der so gereinigten Testoberflächen wurden die Platten mindestens 48 Stunden im Normklima 23° – C/50 % rel. Luftfeuchtigkeit gelagert.

In den folgenden Beispielen beziehen sich alle %-Angaben, sofern nicht anders angegeben, auf das Gewicht.

Vergleichsversuch A

In einem 16 l-Rührautoklaven wurden 3 400 g demineralisiertes Wasser, 30 g eines C$_{15}$-Alkylsulfonats, 200 g eines Nonylphenolpolyglycolethers mit 23 Glycoleinheiten (im Mittel) sowie 9 g Natriumvinylsulfonat vorgelegt und 2 000 g Vinylacetat und 1 000g 2-Ethylhexylacrylat wurden einemulgiert. Es wurde auf 50° C aufgeheizt und bis 50 bar Ethylen aufgedrückt. Die Polymerisation wurde gestartet und aufrechterhalten durch gleichzeitige Dosierung von jeweils 70 ml/h 8 %iger Ammoniumpersulfatlösung sowie 4 %iger Natriumformaldehydsulfoxylatlösung.

Nachdem der Start erfolgt war (Druckanstieg auf 54 bar), wurden während 3 h 2 000 g 2-Ethylhexylacrylat und 125 g Acrylsäure kontinuierlich zugegeben. Die Dosierung der Redoxkomponenten wurde danach noch für 2 h fortgesetzt. Der Ethylendruck war auf 43 bar gesunken.

Nach Abkühlen und Entspannen resultierte eine stabile Dispersion mit 57,2 % Feststoffgehalt, einer Viskosität von 184 mPa.s (Epprecht Rheometer STV, B III), einem K-Wert (nach Fikentscher, Cellulosechemie Bd. 13, 58, 1932; gemessen in 1 %iger Tetrahydrofuranlösung) von 81 und einem Ethylengehalt des Polymeren von 11,8 %.

Beispiel 1:

In einem 16 l-Rührautoklaven wurden 4 100 g demineralisiertes Wasser, 38 g eines C$_{15}$-Alkylsul-

fonats, 250 g eines Nonylphenolpolyglycolethers (wie im Vergleichsversuch A) 31 g Acrylamid und 10 g Natriumvinylsulfonat vorgelegt und 2 480 g Vinylacetat sowie 750 g 2-Ethylhexylacrylat einemulgiert. Es wurde auf 50°C aufgeheizt und mit Ethylen bis 50 bar gesättigt. Polymerisationsstart und -weiterführung wurden durch gleichzeitige Dosierung von jeweils 50 ml/h von 10 %iger Ammoniumpersulfatlösung und 5 %iger Natriumformaldehydsulfoxylatlosung bewirkt.

Nachdem der Start erfolgt war, wurde über 3 h eine Mischung von 2 970 g 2-Ethylhexylacrylat, 124 g Acrylsäure und 310 g 2-Hydroxyethylacrylat dosiert. Danach wurde die Dosierung der Redox-Komponenten noch 4 h fortgesetzt. Der Ethylendruck fiel auf 44 bar.

Nach Abkühlen und Entspannen resultierte eine stabile Dispersion mit 59,3 % Feststoffgehalt, einer Viskosität von 1 098 mPa.s (Epprecht Rheometer STV, C III), einem K-Wert von 89 und Ethylengehalt des Polymeren von 13 %.

Vergleichsversuch B

Es wurde wie in Beispiel 1 verfahren, jedoch wurden in der Polymerisationsvorlage 62 g Acrylamid vorgelegt.

Es resultierte eine Dispersion mit 57,3 % Feststoffgehalt, einer Viskosität von' 7 600 mPa.s (Epprecht Rheometer STV, D III), K-Wert 88 und einem Ethylengehalt des Polymeren von 14,7 %.

Beispiel 2:

In einem 400 l-Rührautoklaven wurden 94 kg demineralisiertes Wasser, 0,75 kg eines $C_{15}$-Alkylsulfonats, 5 kg des Nonylphenolpolyglycolethers aus Vergleichsversuch A , 0,2 kg Natriumvinylsulfonat, 0,62 kg Acrylamid und 1,24 kg Acrylsäure vorgelegt und 49,6 kg Vinylacetat sowie 15 kg 2-Ethylhexylacrylat einemulgiert.

Polymerisationsstart und -weiterführung erfolgten durch gleichzeitiges Dosieren von jeweils 0,8 l/h von 7 %iger Ammoniumpersulfatlösung und 3,5 %iger Natriumformaldehydsulfoxylatlösung.

Nachdem der Polymerisationsstart erfolgt war, wurde über 4 h eine Mischung aus 55,7 kg 2-Ethylhexylacrylat, 1,86 kg Acrylsäure und 6,2 kg 2-Hydroxyethylacrylat zugegeben. Danach wurden die Redoxkomponenten noch weitere 6 h dosiert; der Ethylendruck sank dabei auf 37 bar.

Nach Abkühlen und Entspannen resultierte eine Dispersion mit 58,8 % Feststoffgehalt, einer Viskosität von 8 680 mPa.s (Epprecht Rheometer STV, D III), einem K-Wert von 100 und einem Ethylengehalt des Polymeren von 13,3 %.

Vergleichsversuch C

In einem 16 l-Rührautoklaven wurden 4 940 g demineralisiertes Wasser, 40 g eines $C_{15}$-Alkylsulfonats und 70 g des Nonylphenolpolyglycolethers aus Vergleichsversuch A, 11 g Natriumvinylsulfonat sowie 70 g Acrylsäure und 17 g Acrylamid vorgelegt und 2 760 g Vinylacetat und 830 g 2-Ethylhexylacrylat wurden einemulgiert. Es wurde auf 50°C aufgeheizt und bis 50 bar Ethylen aufgedrückt.

Polymerisationsstart und -weiterführung erfolgten durch gleichzeitige Dosierung von jeweils 20 ml/h an 10 %iger Ammoniumpersulfatlösung und 5 %iger Natriumformaldehydsulfoxylatlösung.

Nachdem der Start erfolgt war, wurden während 9 h eine Mischung von 3 410 g 2 Ethylhexylacrylat und 104 g Acrylsäure sowie eine Lösung von 210 g des obigen Nonylphenolpolyglycolethers in 860 g demineralisiertem Wasser kontinuierlich zugegeben. Die Dosierung der Redoxkomponenten wurde danach noch 5 h fortgesetzt. Der Ethylendruck war auf 40 bar gesunken.

Nach Abkühlen und Entspannen resultierte eine Dispersion mit 54,5 % Feststoffgehalt, einer Viskosität von 810 mPa.s (Epprecht Rheometer STV, C III), einem K-Wert von 95,6 und einem Ethylengehalt des Polymeren von 18,3 %.

Beispiel 3:

Vergleichsversuch C wurde wiederholt, aber in die Monomerdosierung wurden zusätzlich 415 g 2-Hydroxyethylacrylat gegeben.

Es resultierte eine Dispersion mit 53,0 % Feststoffgehalt, einer Viskosität von 1 126 mPa.s (Epprecht Rheometer STV, C III), einem K-Wert von 92,5 und einem Ethylengehalt von 18,3 %.

Die Meßergebnisse sind in der folgenden Tabelle 1 aufgelistet.

Tabelle 1:

Prüfwerte von Dispersionsbeschichtungen mit ca. 25 µ Trockenfilmstärke auf 100 µ starken
Weich-PVC-Folien

| Dispersion aus Beispiel bzw. Vergleichsversuch | Wärmeschäl-standfestig-keit (Minuten/cm) bei 50°C | Oberflächen-klebrigkeit (N/2,5 cm) | Schälfestigkeit (N/2,5 cm) auf Glas nach einer Verklebungszeit von | | Scherstandfestigkeit (Minuten) | |
|---|---|---|---|---|---|---|
| | | | 8 Min. | 24 Std. | 23°C | 50°C |
| A | 1000 K | – | – | – | 107 K | 17 K |
| 1 | 4000 A | 9,7 | 6,2 A | 9,5 A | 1550 K | 200 K |
| B | 16 A | 10,1 | 6,1 A | 9,6 A | 3000 K | 500 K |
| 2 | 13000 A | 9,8 | 6,2 A | 9,9 A | 5000 K | 3000 K |
| C | 4600 AK | 7,5 | 6,7 A | 17,4 A | 3300 K | 290 K |
| 3 | ›20000 A | 6,9 | 6,4 A | 17,3 A | 2800 K | 2400 K |

A = Adhäsionsbruch          K = Kohäsionsbruch

EP 0 185 356 B1

**Ansprüche**

1. Wäßrige Haftkleberdispersion, enthaltend, bezogen auf das Gesamtgewicht der Dispersion, 40 bis 65 Gewichtsprozent eines Copolymerisats, welches durch radikalische Copolymerisation von Ethylen, Acrylestern mit $C_4$ bis $C_{12}$-Alkylgruppen, Vinylacetat, ethylenisch ungesättigten Carbonsäuren, ethylenisch ungesättigten hydroxyalkylfunktionellen Verbindungen, gegebenenfalls (Meth-)Acrylamid und gegebenenfalls weiterer einfach oder mehrfach ethylenisch ungesättigten Verbindungen nach dem Emulsionspolymerisationsverfahren hergestellt worden ist und eine Glasübergangstemperatur in Bereich von -20 bis -60°C und einen K-Wert in Bereich von 50 bis 180 besitzt, **dadurch gekennzeichnet,** daß es hergestellt worden ist aus
   a) 5 - 25 Gew.-% Ethylen
   b) 95 - 75 Gew.-% eines Comonomerengemisches aus
   b1) 40 - 65 Gew.-% Acrylester(n) von Alkoholen mit 4 bis 12 kohlenstoffatomen,
   b2) 33 - 55 Gew.-% Vinylacetat,
   b3) 1 - 5 Gew.-% ethylenisch ungesättigten Carbonsäuren,
   b4) 1 - 8 Gew.-% ethylenisch ungesättigten hydroxyalkylfunktionellen Verbindungen,
   b5) 0 - 0,8 Gew.-% (Meth-)Acrylamid,
   b6) 0 - 2 Gew.-% weiteren einfach oder mehrfach ethylenisch ungesättigten Verbindungen in Gegenwart von 1 - 6 Gew.-%, bezogen auf das Comonomerengemisch, an üblichen Emulgatoren.

2. Wäßrige Haftkleberdispersion nach Anspruch 1, **dadurch gekennzeichnet,** daß als Acrylester n-Butyl- und/oder 2-Ethylhexylacrylat einpolymerisiert sind.

3. Wäßrige Haftkleberdispersion nach Anspruch 1 oder 2, **dadurch gekennzeichnet,** daß als ethylenisch ungesättigte Carbonsäuren Acrylsäure und/oder Methacrylsäure einpolymerisiert sind.

4. Wäßrige Haftkleberdispersion nach einem der Ansprüche 1 bis 3, **dadurch gekennzeichnet,** daß als hydroxyalkylfunktionelle Verbindungen 2-Hydroxyethyl- und/oder 2-Hydroxygpropylacrylat einpolymerisiert sind.

5. Verfahren zur Herstellung der wäßrigen Haftkleberdispersion nach einem der Ansprüche 1 bis 4, **dadurch gekennzeichnet,** daß die Comonomeren b) unter einem Ethylendruck von 20 bis 100 bar bei einer Temperatur von 30 bis 80°C in Anwesenheit von 1 bis 6 Gew.-%, bezogen auf das Gesamtgewicht der Comonomeren, an Emulgatoren radikalisch polymerisiert werden, wobei die Komponente b1) zumindest teilweise dosiert wird.

6. Verfahren nach Anspruch 5, **dadurch gekennzeichnet,** daß 0 bis 0,8 Gew.-%, bezogen auf die Comonomeren b), (Meth-)Acrylamid in der Polymerisationsvorlage eingesetzt werden.

7. Verfahren nach Anspruch 5 oder 6, **dadurch gekennzeichnet,** daß die ungesättigte(n) Carbonsäure(n) auf Polymerisationsvorlage und Monomerdosierung im Gewichtsverhältnis von 1 : 5 bis 5 : 1 verteilt ist.

**Claims**

1. Aqueous contact adhesive dispersion containing, relative to the total weight of the dispersion, 40 to 65% by weight of a copolymer which has been prepared by free-radical copolymerization of ethylene, acrylic esters having $C_4$ to $C_{12}$-alkyl groups, vinyl acetate, ethylenically unsaturated carboxylic acids, ethylenically unsaturated hydroxyalkyl-functional compounds, optionally (meth)acrylamide and optionally other mono- or polyethylenically unsaturated compounds by the emulsion polymerization process, and has a glass transition temperature in the range of from -20 to -60°C and a K-value in the range of from 50 to 180, characterized in that it has been prepared from
   a) 5 - 25% by weight of ethylene
   b) 95 - 75% by weight of a comonomer mixture of
   b1) 40 - 65% by weight of acrylic ester(s) of alcohols having 4 to 12 carbon atoms,
   b2) 33 - 55% by weight of vinyl acetate,
   b3) 1 - 5% by weight of ethylenically unsaturated carboxylic acids,
   b4) 1 - 8% by weight of ethylenically unsaturated hydroxyalkyl-functional compounds,
   b5) 0 - 0.8% by weight of (meth)acrylamide
   b6) 0 - 2% by weight of other mono- or polyethylenically unsaturated compounds in the presence of 1-6% by weight, relative to the comonomer mixture, of customary emulsifiers.

2. Aqueous contact adhesive dispersion according to Claim 1, characterized in that the acrylic esters which have been incorporated by copolymerization are n-butyl and/or 2-ethylhexyl acrylate.

3. Aqueous contact adhesive dispersion according to Claim 1 or 2, characterized in that the ethylenically unsaturated carboxylic acids which have been incorporated by copolymerization are acrylic acid and/or methacrylic acid.

4. Aqueous contact adhesive dispersion according to any one of Claims 1 to 3, characterized in that the hydroxyalkyl-functional compounds which have been incorporated by copolymerization are 2-hydroxyethyl and/or 2-hydroxypropyl acrylate.

5. Process for the preparation of the aqueous contact adhesive dispersion according to any one of Claims 1 to 4, characterized in that the comonomers b) are free-radical polymerized under an ethylene pressure of 20 to 100 bar at a temperature of 30 to 80°C in the presence of 1 to 6% by weight, relative to the total weight of comonomers, of emulsifiers, the component b1) being metered in at least in part.

6. Process according to Claim 5, characterized in that 0 to 0.8% by weight, relative to the comonomers b), of (meth)acrylamide are used in the initial polymerization charge.

7. Process according to Claim 5 or 6, characterized in that the unsaturated carboxylic acid(s) is/are divided between the initial polymerization charge and the metered-in monomers in a ratio by weight of 1:5 to 5:1.

**Revendications**

1. Dispersion aqueuse d'un adhésif de contact, contenant, par rapport au poids total de la dispersion, de 40 à 65 % en poids d'un copolymère, lequel a été préparé par le procédé de polymérisation en émulsion, par copolymérisation radicalaire d'éthylène, d'acrylates d'alkyle en $C_4$ à $C_{12}$, d'acétate de vinyle, d'acides carboxyliques à insaturation éthylénique, de composés hydroxyalkyl-fonctionnels à insaturation éthylénique, éventuellement de (méth)-acrylamide et éventuellement d'autres composés à une ou plusieurs insaturations éthyléniques, et présentant une température de transition vitreuse comprise entre -20 et -60°C et un coefficient K compris entre 50 et 180, caractérisé en ce qu'elle a été préparée à partir
a) de 5-25 % en poids d'éthylène

b) de 95-75 % en poids d'un mélange de comonomères comprenant :
b1) 40-65 % en poids d'acrylate(s), d'alcools ayant de 4 à 12 atomes de carbone,
b2) 33-55 % en poids d'acétate de vinyle,
b3) 1-5 % en poids d'acides carboxyliques à insaturation éthylénique,
b4) 1-8 % en poids de composés hydroxyalkyl-fonctionnels à insaturation éthylénique,
b5) 0-0,8 % en poids de (méth)acrylamide,
b6) 0-2 % en poids d'autres composés à une ou plusieurs insaturations éthyléniques,
en présence de 1-6 % en poids, par rapport au mélange de comonomères, d'émulsifiants usuels.

2. Dispersion aqueuse d'un adhésif de contact selon la revendication 1, caractérisée en ce que l'acrylate utilisé dans la polymérisation est l'acrylate de n-butyle et/ou d'éthyl-2 hexyle.

3. Dispersion aqueuse d'un adhésif de contact selon la revendication 1 ou 2, caractérisée en ce qu'on utilise pour la polymérisation, en tant qu'acides carboxyliques à insa turation éthylénique, de l'acide acrylique et/ou de l'acide méthacrylique.

4. Dispersion aqueuse d'un adhésif de contact selon l'une des revendications 1 à 3, caractérisée en ce qu'on utilise pour la polymérisation, en tant que composés hydroxyalkyle fonctionnels, de l'acrylate d'hydroxy-2 éthyle et/ou de l'acrylate d'hydroxy-2 propyle.

5. Procédé de préparation de la dispersion aqueuse d'un adhésif de contact selon l'une des revendications 1 à 4, caractérisé en ce que les comonomères b) subissent une polymérisation radicalaire sous une pression d'éthylène de 20 à 100 bar, à une température de 30 à 80°C, en présence de I à 6 % en poids d'émulsifiants, par rapport au poids total des comonomères, le composant b1) étant au moins partiellement dosé.

6. Procédé selon la revendication 5, caractérisé en ce qu'on utilise, dans la masse destinée à être polymérisée, de 0 à 0,8 % en poids de (méth)acrylamide, par rapport aux comonomères b).

7. Procédé selon les revendications 5 ou 6, caractérisé en ce que le ou les acides carboxyliques insaturés sont répartis selon une proportion pondérale de 1:5 à 5:1 entre la masse destinée à la polymérisation et les monomères ajoutés après-coup.